# EUROPEAN PATENT APPLICATION

(11) **EP 4 786 340 A1**
(43) Date of publication of application: **05.08.2026**
(21) Application number: 24885881.3
(22) Date of filing: 01.11.2024
(51) Int. Cl.: B64D 37/30, B64D 33/10, B64D 37/04

(54) **HYDROGEN AIRCRAFT**

(30) Priority: 02.11.2023 JP 2023188432
(71) Applicant: KAWASAKI JUKOGYO KABUSHIKI KAISHA, Kobe-shi, Hyogo 650-8670 (JP)
(72) Inventor: ASANO, Hiroyoshi, Hyogo 650.8670 (JP)
(74) Representative: Bals & Vogel Patentanwälte PartGmbB
(86) International application number: PCT/JP2024/039129
(87) International publication number: WO 2025/095117

(57) **Abstract**

A hydrogen aircraft includes an airframe (10), a hydrogen tank (30) that stores liquid hydrogen, a propulsion device (40) that generates thrust for the airframe using hydrogen as fuel, a liquid hydrogen transfer device (50) that transfers liquid hydrogen from the hydrogen tank (30) to the propulsion device (40), and a cooling device (70) including a heat exchanger (71) that exchanges heat between liquid hydrogen and air inside the airframe (10) to cool the air. The cooling device (70) cools an inner surface of a skin of the airframe (10) using air cooled by the heat exchanger (71).

## Description

### FIELD

The present disclosure relates to a hydrogen aircraft.

### BACKGROUND

Patent Literature 1 describes an aircraft including ducts as fluid passages inside the wing skin to cool the wing skin with a cryogenic fuel flowing through the ducts for increased fuel efficiency. Cooling the wing skin reduces air drag along the skin surface, thus increasing aircraft fuel efficiency.

In the above structure described in Patent Literature 1, the fuel flows inside the wing skin. This structure can be complicated to prevent fuel leakage or unexpected fuel reaction in the wings.

### CITATION LIST

### PATENT LITERATURE

Patent Literature 1: U.S. Patent No. 4807831

### BRIEF SUMMARY

One or more aspects of the present disclosure are directed to a hydrogen aircraft that can achieve improved fuel efficiency with a simple structure.

A hydrogen aircraft according to one aspect of the present disclosure includes an airframe, a hydrogen tank that stores liquid hydrogen, a propulsion device that generates thrust for the airframe using hydrogen as fuel, a liquid hydrogen transfer device that transfers liquid hydrogen from the hydrogen tank to the propulsion device, and a cooling device including a heat exchanger that exchanges heat between liquid hydrogen and air inside the airframe to cool the air. The cooling device cools an inner surface of a skin of the airframe using air cooled by the heat exchanger.

### ADVANTAGEOUS EFFECTS

The hydrogen aircraft according to the above aspect of the present disclosure can achieve improved fuel efficiency with a simple structure.

### BRIEF DESCRIPTION OF DRAWINGS

FIG. 1 is a schematic bottom view of a hydrogen aircraft according to a first embodiment of the present disclosure.
FIG. 2 is a schematic plan view of a main wing showing the internal structure.
FIG. 3 is a schematic perspective view of an end portion of the main wing.
FIG. 4 is a diagram of a propulsion system and a cooling device.
FIG. 5 is a schematic perspective view of a main wing of a hydrogen aircraft according to a second embodiment of the present disclosure, showing the internal structure of the main wing.
FIG. 6 is a schematic plan view of an end portion of the main wing of the hydrogen aircraft according to the second embodiment of the present disclosure.

### DETAILED DESCRIPTION

### Overall Structure

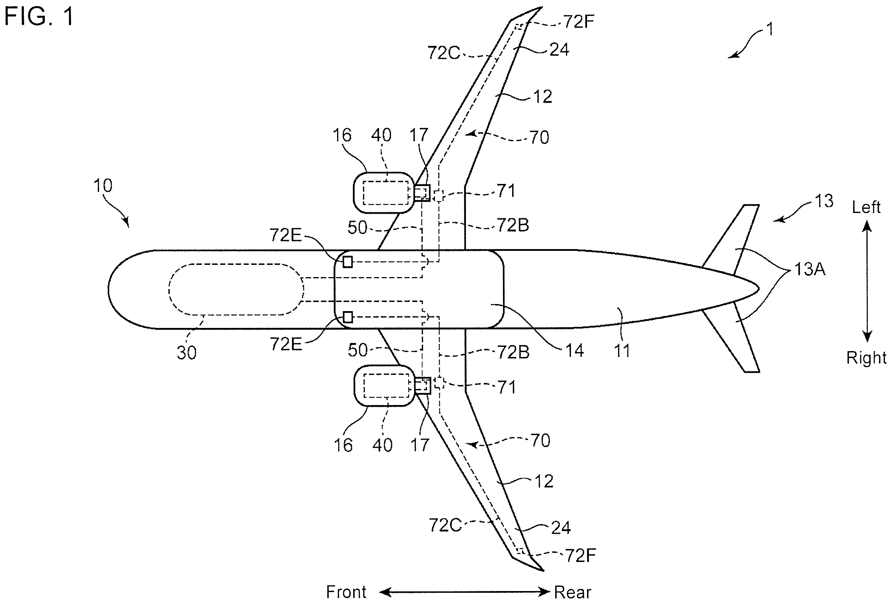

FIG. 1 is a schematic bottom view of a hydrogen aircraft 1 according to a first embodiment of the present disclosure. The hydrogen aircraft 1 shown in the figure includes an airframe 10, a hydrogen tank 30, propulsion devices 40, and cooling devices 70.

The hydrogen aircraft 1 uses hydrogen as an energy source of thrust. The propulsion devices 40 generate thrust for the airframe 10 using hydrogen as fuel. The direction in which the hydrogen aircraft 1 is propelled is hereafter simply referred to as a front-rear direction, with the direction in which the hydrogen aircraft 1 moves forward being referred to as front and the opposite as rear. The vertical direction for the hydrogen aircraft 1 being parked is simply referred to as a vertical direction, and the direction perpendicular to the front-rear direction and the vertical direction is referred to as a lateral direction. The front-rear direction is parallel to the longitudinal direction of a fuselage 11 (described later).

The airframe 10 includes the fuselage 11, a pair of right and left main wings 12, and an empennage 13. The two main wings 12 are symmetric laterally.

The fuselage 11 is substantially cylindrical and extends in the front-rear direction. The fuselage 11 includes structural members such as circular frames and stringers, and fuselage panels joined cylindrically. The fuselage panels define the skin of the fuselage 11. More specifically, the fuselage panels as plates define the outer surface of the fuselage 11.

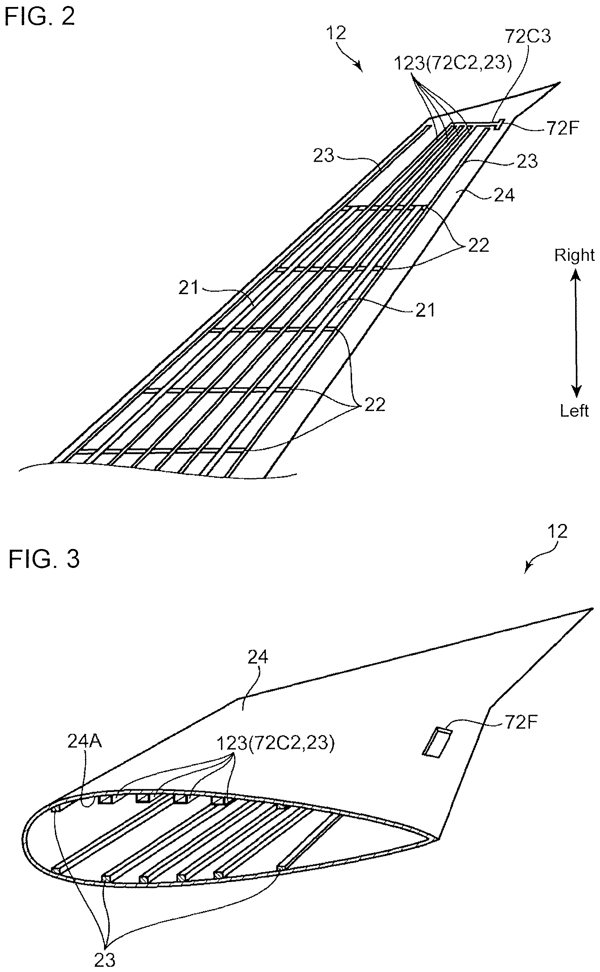

The pair of main wings 12 extend outward from the opposite sides of the fuselage 11 in the lateral direction, or specifically, in the width direction of the fuselage 11. FIG. 2 is a schematic plan view of one of the main wings 12 showing the internal structure. FIG. 3 is a schematic perspective view of a lateral end portion of one of the main wings 12.

The main wings 12 each include lateral spars 21 defining the profile of the main wing 12, and multiple ribs 22 arranged perpendicular to the spars 21. The main wing 12 includes a main wing panel 24 attached to the spars 21 and the ribs 22. The main wing 12 includes multiple stringers 23 extending in the lateral direction to connect the ribs 22 to stiffen the main wing 12. In the example in FIG. 2, the main wing 12 includes two spars 21 arranged in the front-rear direction, multiple stringers 23 arranged in the front-rear direction along the upper inner surface of the main wing panel 24, and multiple stringers 23 arranged in the front-rear direction along the lower inner surface of the main wing panel 24. The spars 21 are main structures that receive loads during flight. The stringers 23 are stiffeners supporting the main wing panel 24. The main wing panel 24 is the skin of the main wing 12. More specifically, the main wing panel 24 is a plate defining the outer surface of the main wing 12. The main wing 12 may further include flaps or ailerons. Although the main wing 12 may be at any position, the main wing 12 in the first embodiment is attached to the middle portion of the fuselage 11 in the front-rear direction.

The main wing 12 supports a nacelle 16, which is a cylindrical housing extending in the front-rear direction. More specifically, the main wing 12 has an engine pylon 17 fixed to the lower surface of the main wing 12. The engine pylon 17 extends in the front-rear direction. The nacelle 16 is connected to the engine pylon 17, and is supported by the main wing 12 with the engine pylon 17. The nacelle 16 is supported by the main wing 12 below the main wing 12 in the vertical direction, protruding frontward from the main wing 12 as viewed in plan. The nacelle 16 and the engine pylon 17 are provided for each of the two main wings 12. More specifically, the hydrogen aircraft 1 includes a pair of right and left nacelles 16 and a pair of right and left engine pylons 17.

A fuselage fairing 14 is attached to the lower surface of the fuselage 11. To eliminate the level difference between the fuselage 11 and the main wings 12, the fuselage fairing covers, from below, the roots of the main wings 12 and the lower surface of the fuselage 11 continuous with the roots of the main wings 12. In the first embodiment, the fuselage fairing 14 extends laterally across the two main wings 12.

The empennage 13 is located at the rear end of the fuselage 11. The empennage 13 includes a vertical tail extending upward from the upper surface of the rear end of the fuselage 11. The empennage 13 includes a pair of horizontal tails 13A extending leftward and rightward from the vertical tail.

The hydrogen tank 30 stores hydrogen used as fuel. The hydrogen tank 30 is insulated from heat and pressure-resistant. The hydrogen tank 30 stores liquefied hydrogen at cryogenic temperatures of -253 °C or lower under cooled and pressurized conditions. The hydrogen tank 30 is installed inside the fuselage 11. In the illustrated example, the hydrogen tank 30 is installed in a front portion of the fuselage 11 in the front-rear direction.

### Propulsion System

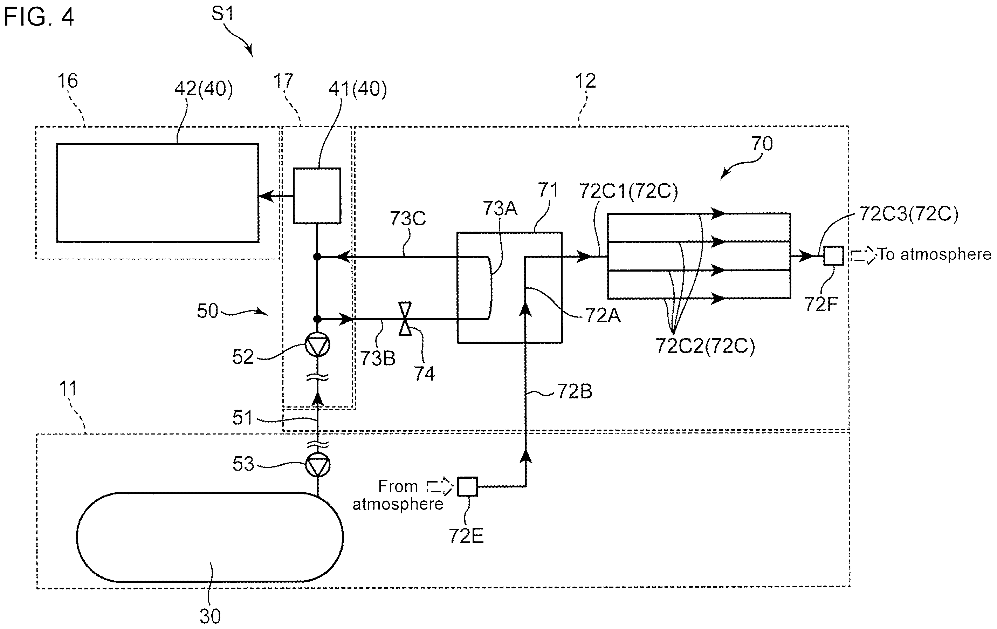

FIG. 4 is a schematic diagram of a propulsion system S1 including one of the propulsion devices 40 and one of the cooling devices 70 (described later). The hydrogen aircraft 1 according to the first embodiment includes a pair of right and left propulsion systems S1 each including the corresponding propulsion device 40, and a pair of right and left cooling devices 70. FIG. 4 shows one of the propulsion systems S1 and one of the cooling devices 70. The two propulsion systems S1 are substantially symmetric laterally. One of the propulsion systems S1 will now be described.

The propulsion system S1 includes the propulsion device 40 and a liquid hydrogen transfer device 50 that transfers liquid hydrogen fed from the hydrogen tank 30 to the propulsion device 40. As described above, the hydrogen aircraft 1, which includes the pair of right and left propulsion systems S1, includes a pair of right and left propulsion devices 40 and a pair of right and left liquid hydrogen transfer devices 50.

The liquid hydrogen transfer device 50 includes a liquid hydrogen line 51, a downstream pump 52, and an upstream pump 53. The liquid hydrogen line 51 is a passage through which liquid hydrogen flows, and connects the hydrogen tank 30 and the propulsion device 40. The downstream pump 52 and the upstream pump 53 are located along the liquid hydrogen line 51 to pump out the liquid hydrogen stored in the hydrogen tank 30 to the propulsion device 40. In the flow direction of the liquid hydrogen, the downstream pump 52 is downstream from the upstream pump 53, or specifically, closer to the propulsion device 40 than the upstream pump 53 is.

The propulsion device 40 includes a vaporizer 41 and an engine 42. The engine 42 is housed in the nacelle 16. The vaporizer 41 is housed in the engine pylon 17.

The vaporizer 41 vaporizes liquid hydrogen. The liquid hydrogen line 51 is connected to the vaporizer 41 included in the propulsion device 40. Liquid hydrogen is fed from the hydrogen tank 30 into the vaporizer 41 and is vaporized in the vaporizer 41.

The engine 42 is a hydrogen gas turbofan engine including a combustor, a turbine, a compressor, and a fan. The vaporizer 41 and the combustor are connected with an injector located between them. The hydrogen gas vaporized by the vaporizer 41 is injected into the combustor. The combustor receives air compressed by the compressor. This allows the hydrogen gas to react with air to burn in the combustor and generate combustion energy. The turbine is rotated by the generated combustion energy to generate a jet stream, and rotates the compressor and the fan. The engine 42 is installed in the nacelle 16 to cause the jet stream generated by the turbine to be jetted rearward and the fan to feed air rearward. The rearward flow of the jet stream and air acts on the airframe 10 as thrust for moving the airframe 10 forward.

### Cooling Device

The two cooling devices 70 on the hydrogen aircraft 1 are substantially symmetric laterally. One of the cooling devices 70 will now be described.

The cooling device 70 includes a heat exchanger 71 to cool the inner surface of the skin of the airframe 10 using air cooled by the heat exchanger. In the first embodiment, the cooling device 70 cools the skin of the main wing 12, or specifically, an inner surface 24A of the main wing panel 24. The cooling device 70 includes a cooling air line 72C and a pre-cooling air line 72B, in addition to the heat exchanger 71. The cooling device 70 also includes a first branch line 73B and a second branch line 73C.

The heat exchanger 71 exchanges heat between liquid hydrogen and air. The heat exchanger 71 indirectly exchanges heat between two fluids contactlessly. The heat exchanger 71 includes a first passage 72A and a second passage 73A through which two fluids flow independently of each other. As described later, the first passage 72A receives air inside the airframe 10, and the second passage 73A receives liquid hydrogen. As described above, the liquid hydrogen is in the cryogenic state of -230 °C or lower, which is sufficiently lower than the temperature of the air inside the airframe 10. The air is thus cooled by the liquid hydrogen in the heat exchanger 71.

In the first embodiment, the heat exchanger 71 is located outside the hydrogen tank 30. More specifically, the heat exchanger 71 is installed inside the main wing 12 at a position near the engine pylon 17.

The first branch line 73B and the second branch line 73C are passages through which liquid hydrogen flows. The first branch line 73B and the second branch line 73C branch from the liquid hydrogen line 51. In the flow direction of liquid hydrogen through the liquid hydrogen line 51, the branch point of the first branch line 73B from the liquid hydrogen line 51 is upstream from the branch point of the second branch line 73C from the liquid hydrogen line 51. The first branch line 73B is connected to the heat exchanger 71 to communicate with one end of the second passage 73A in the heat exchanger 71, thus connecting the second passage 73A to the liquid hydrogen line 51. The second branch line 73C is connected to the heat exchanger 71 to communicate with the other end of the second passage 73A in the heat exchanger 71, thus connecting the second passage 73A to a portion of the liquid hydrogen line 51 downstream from the branch point of the first branch line 73B.

This structure directs part of the liquid hydrogen flowing through the liquid hydrogen line 51 fed from the hydrogen tank 30 into the second passage 73A in the heat exchanger 71 through the first branch line 73B. The part of the liquid hydrogen passes through the second passage 73A, or specifically, the heat exchanger 71, and then returns to the liquid hydrogen line 51 through the second branch line 73C.

The first branch line 73B and the second branch line 73C branch from a point of the liquid hydrogen line 51 downstream from the downstream pump 52. More specifically, the end of each of the first branch line 73B and the second branch line 73C opposite to the heat exchanger 71 connects a portion of the liquid hydrogen line 51 between the propulsion device 40 and the downstream pump 52, which is located most downstream of the multiple pumps installed along the liquid hydrogen line 51 in the flow direction of liquid hydrogen. The downstream pump 52 corresponds to a pump in an aspect of the present disclosure.

In the first embodiment, an on-off valve 74 is installed along the first branch line 73B to open and close the first branch line 73B. When the on-off valve 74 is closed, liquid hydrogen does not flow into the heat exchanger 71. The on-off valve 74 is open and closed in response to a signal from a controller installed in the hydrogen aircraft 1. The on-off valve 74 is open during flight of the hydrogen aircraft 1. For example, the on-off valve 74 is open when the altitude detected by an altimeter installed in the hydrogen aircraft 1 is higher than a predetermined reference altitude and is closed when the detected altitude is lower than or equal to the reference altitude.

The cooling air line 72C and the pre-cooling air line 72B are passages through which air flows. The pre-cooling air line 72B is connected to the heat exchanger 71 to communicate with one end of the first passage 72A in the heat exchanger 71. The cooling air line 72C is connected to the heat exchanger 71 to communicate with the other end of the first passage 72A in the heat exchanger 71.

The cooling device 70 includes an air intake 72E that is open to the outside of the airframe 10 to draw air from outside the airframe 10 into the pre-cooling air line 72B. In the first embodiment, the air intake 72E is open frontward in the fuselage fairing 14. The air intake 72E thus mainly draws, into the pre-cooling air line 72B, air that is a headwind passing under the airframe 10 and flowing rearward relative to the airframe 10 under the airframe 10.

The air drawn into the pre-cooling air line 72B through the air intake 72E is introduced into the first passage 72A in the heat exchanger 71. In the first embodiment, the pre-cooling air line 72B has a portion extending in the fuselage 11 and the remaining portion extending in the main wing 12. The air drawn into the pre-cooling air line 72B through the air intake 72E thus passes through the fuselage 11 and the main wing 12 and enters the first passage 72A in the heat exchanger 71.

The air introduced into the first passage 72A is cooled through heat exchange with liquid hydrogen in the heat exchanger 71. The air cooled by the heat exchanger 71 is then directed from the first passage 72A to the cooling air line 72C and flows through the cooling air line 72C. In this manner, the air flows through the pre-cooling air line 72B, the first passage 72A, or specifically, the heat exchanger 71, and the cooling air line 72C in the stated order. In other words, the pre-cooling air line 72B, the first passage 72A, or specifically, the heat exchanger 71, and the cooling air line 72C are arranged in this order from an upstream end in the airflow direction. The air intake 72E is located at the upstream end of the line including the pre-cooling air line 72B, the first passage 72A, or specifically, the heat exchanger 71, and the cooling air line 72C in the airflow direction in the line.

The cooling air line 72C is located in the main wing 12. The cooling air line 72C extends from near the engine pylon 17 in which the heat exchanger 71 is installed to near the outer end of the main wing 12 in the lateral direction.

The cooling air line 72C branches into multiple air branch lines 72C2 in its midsection. The cooling air line 72C includes the air branch lines 72C2, a pre-branch line 72C1, and a merge line 72C3. The pre-branch line 72C1 extends upstream from the branch point of the air branch lines 72C2, or more specifically, upstream from the upstream ends of the air branch lines 72C2 in the air flow direction. The merge line 72C3 extends downstream from the merge point of the air branch lines 72C2, or specifically, downstream from the downstream ends of the air branch lines 72C2. Each air branch line 72C2 extends laterally along the skin of the main wing 12, or specifically, along the inner surface 24A of the main wing panel 24.

In the first embodiment, some of the stringers 23 in the main wing 12 and the main wing panel 24 define the air branch lines 72C2. More specifically, in the first embodiment, some of the stringers 23 in the main wing 12 and the main wing panel 24 serve as structural members of the main wing 12 and define the air branch lines 72C2.

FIG. 3 is a schematic cross-sectional view of the main wing 12. The stringers 23 installed in the main wing 12 and defining the air branch lines 72C2 are hereafter referred to as cooling line stringers 123. In the illustrated example, the four stringers 23 located between the two spars 21 in the main wing 12 and extending along the upper inner surface 24A of the main wing panel 24 are the respective cooling line stringers 123.

The cooling line stringers 123 all have the same structure. The cooling line stringers 123 are hollow. More specifically, as shown in FIG. 3, each cooling line stringer 123 extends downward and opens upward in a cross section perpendicular to the lateral direction. In other words, each cooling line stringer 123 is curved or bent to protrude downward and has an open upper end. In the example in FIG. 3, each cooling line stringer 123 is substantially U-shaped. More specifically, each cooling line stringer 123 includes a bottom wall extending in the lateral direction along a plane intersecting with the vertical direction and side walls extending upward from the front edge and the rear edge of the bottom wall. The cooling line stringers 123 have their upper ends in contact with the upper inner surface 24A of the main wing panel 24 to have their upper openings closed by the inner surface 24A of the main wing panel 24. The air branch lines 72C2 are thus defined between the cooling line stringers 123 and the inner surface 24A of the main wing panel 24 as laterally extending spaces through which air flows. The cooling line stringers 123 each correspond to a stiffener in an aspect of the present disclosure.

The cooling device 70 includes an air outlet 72F that is open to the outside of the airframe 10 to release air inside the cooling air line 72C to outside the airframe 10. In the first embodiment, the air outlet 72F is open to the outside of the main wing 12 at the outer lateral end of the main wing panel 24. The air outlet 72F communicates with the downstream end of the cooling air line 72C. More specifically, the merge line 72C3 is located at the outer lateral end of the main wing panel 24, and the downstream end of the merge line 72C3 located at the outer lateral end of the main wing panel 24 communicates with the air outlet 72F.

In the first embodiment, the air outlet 72F is located on the upper surface of the main wing panel 24. During the flight of the hydrogen aircraft 1, the pressure is low on the upper surface of the main wing panel 24. More specifically, the pressure on the surface of the main wing panel 24 is at least lower than the pressure at the opening of the air intake 72E, which receives a headwind as described above. In the first embodiment, the air outlet 72F is thus at a position to cause the pressure at its opening to be lower than the pressure at the opening of the air intake 72E during flight. This structure in the first embodiment facilitates air introduction into the path through which air flows from the air intake 72E to the air outlet 72F, or more specifically, the path including the pre-cooling air line 72B, the first passage 72A, and the cooling air line 72C.

In the first embodiment, the air outlet 72F is located on the upper surface of the main wing panel 24 rearward from the middle of the main wing panel 24 in the front-rear direction. The air in the cooling air line 72C is then released from a rear portion of the upper surface of the lateral outer ends of the main wing panel 24 to outside the main wing 12 and the airframe 10.

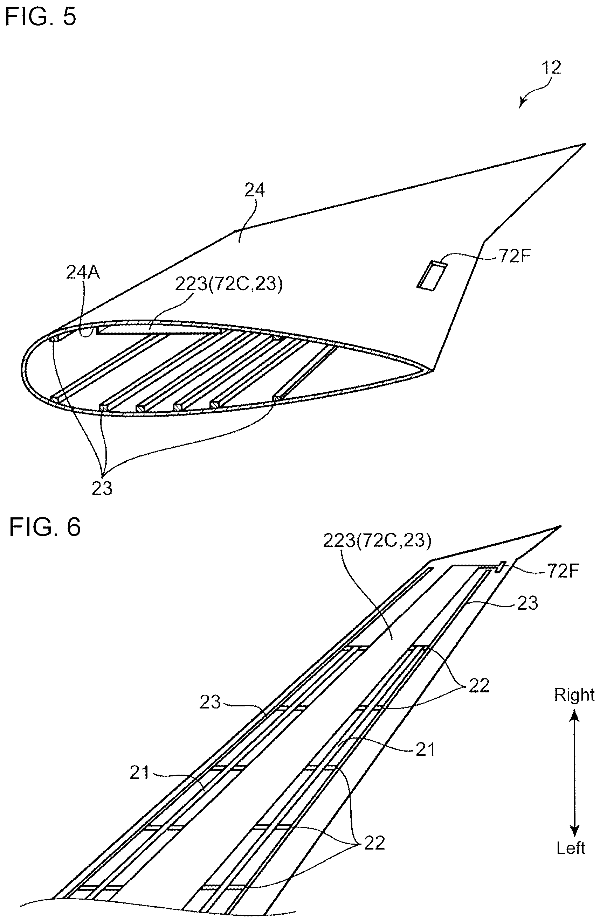

As described above, air is released from the rear portion of the main wing panel 24 to outside the airframe 10 in the first embodiment. This prevents the released air from separating the air layer at, for example, the front edge of the main wing panel 24. Any separation of the air layer at the front edge of the main wing panel 24 can reduce, for example, the efficiency of the aircraft in response to a decrease in lift and an increase in air drag. The structure according to the first embodiment prevents separation of the air layer at, for example, the front edge of the main wing panel 24 as described above, thus releasing the air in the cooling air line 72C to outside the main wing 12 and the airframe 10 while maintaining aircraft efficiency. In the first embodiment, as shown in, for example, FIG. 5, the rear portion of the main wing panel 24 includes a slope extending rearward and obliquely downward. The slope has the air outlet 72F.

As described above, the cooling air line 72C receives air cooled by the heat exchanger 71. The air branch lines 72C2 in the cooling air line 72C extend laterally from near the engine pylon 17 to near the lateral outer end of the main wing 12. The air cooled by the heat exchanger 71 thus cools the inner surface 24A of the main wing panel 24, moves along the inner surface 24A from near the engine pylon 17 to near the lateral outer end of the main wing 12, and then exits the main wing 12 through the air outlet 72F.

### Effects and Others

In the hydrogen aircraft 1 according to the first embodiment described above, heat is exchanged in the heat exchanger 71 between the liquid hydrogen stored as fuel in the hydrogen tank 30 in the airframe 10 and air drawn into the airframe 10 to cool the air. The cooled air then flows along the inner surface 24A of the main wing panel 24 through the cooling air line 72C installed in the main wing 12. The air can thus cool the inner surface 24A of the main wing panel 24.

When a fluid flows along a predetermined wall surface, lower wall surface temperatures increase the area of a laminar boundary layer formed on the wall surface, or more specifically, the distance in the fluid flow direction, to reduce the area of a turbulent boundary layer. Additionally, the frictional drag on a fluid in the laminar boundary layer is lower than the frictional drag on a fluid in the turbulent boundary layer. The hydrogen aircraft 1 according to the first embodiment can thus have lower frictional or air drag on the main wing 12 during flight by cooling the main wing panel 24, thus improving fuel efficiency. In particular, the hydrogen aircraft 1 according to the first embodiment can cool the main wing panel 24 of the skin of the airframe 10 to have lower air drag on the main wing 12. The hydrogen aircraft 1 according to the first embodiment receiving lower air drag can thus operate with lower thrust generated by the engine, thus reliably increasing fuel efficiency.

Further, the hydrogen aircraft 1 according to the first embodiment causes air cooled by liquid hydrogen to flow through the cooling air line 72C, rather than liquid hydrogen. The cooling air line 72C thus may not be designed to carry liquid hydrogen. For example, the passage may not be highly airtight to avoid leakage of liquid hydrogen, and the temperature and other factors in the passage may not be controlled to avoid unexpected reactions of liquid hydrogen. The hydrogen aircraft 1 according to the first embodiment can thus achieve improved fuel efficiency with a simple structure.

In the hydrogen aircraft 1 according to the first embodiment, the heat exchanger 71 is located outside the hydrogen tank 30, and heat is exchanged between the liquid hydrogen fed from the hydrogen tank 30 and air in the heat exchanger 71. The hydrogen aircraft 1 according to the first embodiment thus has less temperature fluctuation and thus less pressure fluctuation of the liquid hydrogen in the hydrogen tank 30, or specifically, less pressure fluctuation in the hydrogen tank 30 than when having the heat exchanger 71 installed inside the hydrogen tank 30 to exchange heat between liquid hydrogen and air in the hydrogen tank 30.

In the hydrogen aircraft 1 according to the first embodiment, the first branch line 73B branches from a portion of the liquid hydrogen line 51 downstream from the downstream pump 52. The liquid hydrogen flowing through the portion of the liquid hydrogen line 51 downstream from the downstream pump 52 is introduced into the heat exchanger 71 to exchange heat with air. More specifically, the liquid hydrogen flowing through a portion of the liquid hydrogen line 51 near the vaporizer 41 in the propulsion device 40 exchanges heat with air. The hydrogen aircraft 1 according to the first embodiment thus allows early introduction of liquid hydrogen heated through heat exchange with air into the vaporizer 41, preventing the liquid hydrogen from vaporizing unexpectedly before being introduced into the vaporizer 41.

The hydrogen aircraft 1 according to the first embodiment has the air outlet 72F on the main wing panel 24. The air outlet 72F is open to the outside of the main wing 12 to release air flowing through the cooling air line 72C to outside the main wing 12. The air flowing through the cooling air line 72C cools the inner surface 24A of the main wing panel 24. The hydrogen aircraft 1 can have, for example, no passages or no pumps for returning the air that has cooled the main wing 12 into the airframe 10. The hydrogen aircraft 1 according to the first embodiment can thus produce the above effects without any weight increase.

In the hydrogen aircraft 1 according to the first embodiment, the air outlet 72F in the main wing 12 is located in the rear portion of the main wing panel 24, allowing air to be released rearward from the air outlet 72F as described above. The hydrogen aircraft 1 according to the first embodiment can thus prevent the air released from the air outlet 72F from separating the air layer formed at, for example, the front edge of the main wing panel 24 during flight. The hydrogen aircraft 1 according to the first embodiment can thus cool the main wing panel 24 while, for example, maintaining the lift generated by the main wing panel 24 and preventing an increase of air drag.

In the hydrogen aircraft 1 according to the first embodiment, the air outlet 72F in the main wing 12 is located on the upper surface of the main wing panel 24. Thus, the pressure at the opening of the air intake 72E is higher than the pressure at the opening of the air outlet 72F during flight. In other words, the pressure at the upstream end of the line including the pre-cooling air line 72B, the first passage 72A, and the cooling air line 72C is higher than the pressure at the downstream end of the line. The hydrogen aircraft 1 according to the first embodiment can thus reliably direct and cause air to flow through the line including the pre-cooling air line 72B, the first passage 72A, and the cooling air line 72C, thus reliably cooling the main wing 12 with the air. The hydrogen aircraft 1 according to the first embodiment can eliminate, for example, a pump for directing and causing air to flow through the above line. The hydrogen aircraft 1 can thus produce the above effects without any weight increase.

In the hydrogen aircraft 1 according to the first embodiment, the air branch lines 72C2, or specifically, part of the cooling air line 72C, are defined by the inner surface 24A of the main wing panel 24. The part of the cooling air line 72C is in contact with and extends along the inner surface 24A of the main wing panel 24. In the hydrogen aircraft 1 according to the first embodiment, the air flowing through the cooling air line 72C can directly cool the main wing panel 24, reliably decreasing the temperature of the main wing panel 24.

In the hydrogen aircraft 1 according to the above embodiment, the air branch lines 72C2, or specifically, part of the cooling air line 72C, is defined by the cooling line stringers 123 for stiffening the main wing panel 24. The hydrogen aircraft 1 according to the first embodiment can thus have the air branch lines 72C2 in the main wing 12 without any weight increase, unlike the structure including components for defining the air branch lines 72C2 separately from the stringers 23.

### Second Embodiment

FIG. 5 is a schematic perspective view of a main wing 12 in a hydrogen aircraft 1 according to a second embodiment of the present disclosure, showing the internal structure of the main wing 12. FIG. 6 is a schematic plan view of an end portion of the main wing 12 in the hydrogen aircraft 1 according to the second embodiment of the present disclosure.

The hydrogen aircraft 1 according to the second embodiment differs from the hydrogen aircraft 1 according to the first embodiment in the structure of the cooling air line 72C. The cooling air line 72C in the hydrogen aircraft 1 according to the second embodiment will now be described. The same reference numerals are used for the same elements as in the first embodiment in describing the hydrogen aircraft 1 according to the second embodiment and in FIGs. 5 and 6.

In the second embodiment, the cooling air line 72C is defined by a cooling line stringer 223 and the upper inner surface 24A of the main wing panel 24, as in the first embodiment. More specifically, the cooling line stringer 223 extends downward and opens upward. The cooling line stringer 223 has its upper end in contact with the upper inner surface 24A of the main wing panel 24 to have the upper opening closed by the inner surface 24A of the main wing panel 24. In the second embodiment, a laterally extending space for allowing air to flow is defined between the cooling line stringer 223 and the main wing panel 24, as in the first embodiment.

In the second embodiment, the cooling air line 72C is unbranched, and one of the stringers 23 in the main wing 12 serves as the cooling line stringer 223 and the cooling air line 72C. In the second embodiment, the dimension of the cooling line stringer 223 in the front-rear direction is larger than the dimensions of the other stringers 23. For example, the dimension of the cooling line stringer 223 in the front-rear direction is at least three times the dimensions of the other stringers 23.

In the second embodiment, the cooling air line 72C has smaller flow passage areas at more downstream positions. More specifically, the height dimension of the cooling line stringer 223 is substantially constant in the lateral direction, or specifically, in the airflow direction. The dimension of the line stringer 223 in the front-rear direction is smaller at more outward positions in the lateral direction, or specifically, at more downstream positions in the air flow direction. The cross-sectional area of the flow passage of the cooling air line 72C is thus smaller at more downstream positions.

### Effects and Others

In the second embodiment, the cooling air line 72C is unbranched. The cooling air line 72C thus has a simpler structure.

The air flowing in the downstream portion of the cooling air line 72C in the air flow direction receives heat from the main wing panel 24. The temperature of the air flowing in the downstream portion is thus higher than the temperature of the air flowing in the upstream portion. In contrast, the flow passage area of the cooling air line 72C in the second embodiment is smaller at more downstream positions, and thus the velocity of the air flowing through the cooling air line 72C is higher at more downstream positions. Thus, the temperature of the portion of the main wing panel 24 cooled by the air flowing through the downstream portion of the cooling air line 72C can also be reduced reliably by the air flowing through the cooling air line 72C. More specifically, in the structure described above in which the cooling air line 72C extends from near the engine pylon 17 toward the outer end of the main wing panel 24 in the lateral direction, the temperature of the outer portion of the main wing panel 24 in the lateral direction can also be reduced reliably.

As described above, the components other than the cooling air line 72C in the second embodiment are the same as in the first embodiment. The second embodiment can thus produce the same effects as the first embodiment.

### Other Modifications

Although the four air branch lines 72C2 are used in the first embodiment, the number of air branch lines 72C2 is not limited to this example. The air branch lines 72C2 may have any specific shape other than the shape described above. The air branch lines 72C2 may be eliminated. In other words, the cooling air line 72C may be a single line without any branches. As in the second embodiment, the air branch lines 72C2 in the first embodiment may have smaller flow passage areas at more downstream positions.

In the first and second embodiments described above, the air branch lines 72C2 are defined by the stringers 23 and the main wing panel 24. The air branch lines 72C2 may be defined by the stringers 23 alone. The air branch lines 72C2 may be defined by components other than the stringers 23.

The air intake 72E and the air outlet 72F may be at any positions other than the positions described above.

The heat exchanger 71 may be at any position other than the above position. For example, the heat exchanger 71 may be located in the engine pylon 17 or the nacelle 16.

The vaporizer 41 may be at any position other than the position described above. The vaporizer 41 may be located near the engine 42. The vaporizer 41 may thus be located in the engine pylon 17 or the nacelle 16 as described above.

The airframe 10 may include multiple hydrogen tanks 30, rather than a single hydrogen tank 30. The hydrogen tank 30 may be located outside the fuselage 11 or the main wing 12, instead of being inside the fuselage 11.

In the first and second embodiments described above, the inner surface 24A of the main wing panel 24 is cooled by air cooled by liquid hydrogen in the heat exchanger 71. However, the cooling target may be any inner surface of the skin of the air frame 10, other than the inner surface 24A of the main wing panel 24. For example, the inner surface of a fuselage panel, which is the skin of the fuselage 11, may be cooled by air. This structure can also reduce air drag on the fuselage panel and thus increase fuel efficiency.

In the first and second embodiments described above, the propulsion device includes the vaporizer 41 and the engine 42, and the engine 42 is a hydrogen gas turbofan engine fueled by hydrogen and including a combustor, a turbine, a compressor, and a fan. However, any propulsion device that generates thrust for the airframe 10 using hydrogen as fuel may be used. For example, a propulsion device mounted on the airframe 10 may include a vaporizer, an engine that includes no turbine unlike in the embodiments and generates combustion energy by burning hydrogen as in the above embodiments, and an electric motor drivable by the engine. In this case, the electric motor rotates the turbine to generate thrust for the airframe 10.

### Overview

The embodiments and modifications described above include the aspects of the disclosure described below.

A hydrogen aircraft according to a first aspect of the present disclosure includes an airframe, a hydrogen tank that stores liquid hydrogen, a propulsion device that generates thrust for the airframe using hydrogen as fuel, a liquid hydrogen transfer device that transfers liquid hydrogen from the hydrogen tank to the propulsion device, and a cooling device including a heat exchanger that exchanges heat between liquid hydrogen and air inside the airframe to cool the air. The cooling device cools an inner surface of a skin of the airframe using air cooled by the heat exchanger.

In the first aspect, the air cooled by liquid hydrogen can cool the inner surface of the skin of the airframe. This reduces frictional or air drag on the skin of the airframe during flight, thus increasing fuel efficiency. In the first aspect, the air cooled by liquid hydrogen, rather than liquid hydrogen, flows through the cooling air line to cool the skin. The cooling air line thus may not be designed to carry liquid hydrogen. The hydrogen aircraft can achieve improved fuel efficiency with a simple structure.

A hydrogen aircraft according to a second aspect is the hydrogen aircraft according to the first aspect in which the heat exchanger exchanges heat between air and liquid hydrogen fed from the hydrogen tank by the liquid hydrogen transfer device.

In the second aspect, the liquid hydrogen can cool air, with less pressure fluctuation in the hydrogen tank.

A hydrogen aircraft according to a third aspect is the hydrogen aircraft according to the second aspect in which the propulsion device includes a vaporizer that vaporizes liquid hydrogen. The liquid hydrogen transfer device includes a liquid hydrogen line connecting the hydrogen tank and the vaporizer to allow passage of liquid hydrogen, and a pump located along the liquid hydrogen line. The heat exchanger exchanges heat between air and liquid hydrogen flowing through a portion of the liquid hydrogen line downstream from the pump.

In the third aspect, the liquid hydrogen heated through heat exchange with air can be introduced into the vaporizer earlier. This prevents liquid hydrogen from vaporizing unexpectedly before being introduced into the vaporizer.

A hydrogen aircraft according to a fourth aspect is the hydrogen aircraft according to any one of the first to third aspects in which the cooling device includes a cooling air line through which air to cool the inner surface of the skin of the airframe flows, and an air outlet being open to an outside of the airframe to release air that has passed through the cooling air line to the outside of the airframe.

In the fourth aspect, air that has passed through the cooling air line is released outside the airframe from the air outlet. This structure eliminates, for example, a passage or a pump for returning air that has cooled the airframe to inside the airframe. This structure can thus achieve improved fuel efficiency with a simple structure without increasing the weight of the hydrogen aircraft.

A hydrogen aircraft according to a fifth aspect is the hydrogen according to the fourth aspect in which the cooling device includes a pre-cooling air line through which air flows before flowing into the heat exchanger, and an air intake being open to the outside of the airframe to draw air into the pre-cooling air line from the outside of the airframe. The air intake is at a position to cause a pressure at an opening of the air intake to be higher than a pressure at an opening of the air outlet during flight of the hydrogen aircraft.

In the fifth aspect, the pressure difference between the air intake at the upstream end of the line defined by the pre-cooling air line, the heat exchanger, and the cooling air line for air flow and the air outlet at the downstream end of the line is used to direct and cause air to flow through the line. This structure can thus eliminate, for example, a pump for directing air and causing the air to flow through the line, and produce the above effects without increasing the weight of the hydrogen aircraft.

A hydrogen aircraft according to a sixth aspect is the hydrogen aircraft according to the fifth aspect in which the airframe includes a fuselage, and a main wing extending outward from the fuselage in a width direction of the fuselage. The cooling air line extends along an inner surface of a skin of the main wing. The air outlet is located in a rear portion of the skin of the main wing.

In the sixth aspect, the cooling air line extends along the inner surface of the skin of the main wing to cool the main wing with air. The air outlet is located at the rear portion of the skin of the main wing to prevent, during flight, the air released from the air outlet from obstructing the rearward airflow formed around the main wing. In other words, the structure can prevent the air released from the air outlet from separating the air layer formed at, for example, the front edge of the main wing panel 24 during flight. The structure can thus cool the main wing panel 24 while, for example, maintaining the lift generated on and around the main wing panel 24 and preventing an increase of air drag.

A hydrogen aircraft according to a seventh aspect is the hydrogen aircraft according to the sixth aspect in which the airframe includes a fuselage, and a main wing extending outward from the fuselage in a width direction of the fuselage. The cooling air line extends along an inner surface of a skin of the main wing. The air outlet is located on an upper surface of the skin of the main wing.

The pressure on the upper surface of the main wing is relatively low during flight. In the seventh aspect, the pressure at the air intake can thus be reliably higher than the pressure at the air outlet during flight.

A hydrogen aircraft according to an eighth aspect is the hydrogen aircraft according to any one of the first to seventh aspects in which the cooling device includes a cooling air line extending along and in contact with the inner surface of the skin of the airframe to allow passage of air to cool the inner surface of the skin of the airframe.

In the eighth aspect, heat can be exchanged efficiently between air flowing through the cooling air line and the inner surface of the skin of the airframe. The skin can thus be cooled efficiently.

A hydrogen aircraft according to a ninth aspect is the hydrogen aircraft according to any one of the first to eighth aspects in which the cooling device includes a cooling air line through which air to cool the inner surface of the skin of the airframe flows. The airframe includes a hollow stiffener stiffening the skin of the airframe and defining at least part of the cooling air line.

In the ninth aspect, the hydrogen aircraft can be more lightweight than when including a member for defining the cooling air line through which air to cool the inner surface of the skin of the airframe flows, separately from a member for stiffening the skin of the airframe.

A hydrogen aircraft according to a tenth aspect is the hydrogen aircraft according to any one of the first to ninth aspects in which the cooling device includes a cooling air line through which air to cool the inner surface of the skin of the airframe flows. The cooling air line has a smaller flow passage area at a more downstream position of the cooling air line.

In the tenth aspect, the airflow velocity can be higher at more downstream positions in the cooling air line through which air to cool the inner surface of the skin of the airframe flows. Thus, the air flowing in a downstream portion of the cooling air line and having higher temperature than the air flowing in an upstream portion can reliably cool the skin of the airframe.

## Claims

1. A hydrogen aircraft, comprising:
an airframe;
a hydrogen tank configured to store liquid hydrogen;
a propulsion device configured to generate thrust for the airframe using hydrogen as fuel;
a liquid hydrogen transfer device configured to transfer liquid hydrogen from the hydrogen tank to the propulsion device; and
a cooling device including a heat exchanger configured to exchange heat between liquid hydrogen and air inside the airframe to cool the air, the cooling device being configured to cool an inner surface of a skin of the airframe using air cooled by the heat exchanger.

2. The hydrogen aircraft according to claim 1, wherein
the heat exchanger exchanges heat between air and liquid hydrogen fed from the hydrogen tank by the liquid hydrogen transfer device.

3. The hydrogen aircraft according to claim 2, wherein
the propulsion device includes a vaporizer configured to vaporize liquid hydrogen,
the liquid hydrogen transfer device includes
a liquid hydrogen line connecting the hydrogen tank and the vaporizer to allow passage of liquid hydrogen, and
a pump located along the liquid hydrogen line, and
the heat exchanger exchanges heat between air and liquid hydrogen flowing through a portion of the liquid hydrogen line downstream from the pump.

4. The hydrogen aircraft according to claim 1, wherein
the cooling device includes
a cooling air line through which air to cool the inner surface of the skin of the airframe flows, and
an air outlet being open to an outside of the airframe to release air that has passed through the cooling air line to the outside of the airframe.

5. The hydrogen aircraft according to claim 4, wherein
the cooling device includes
a pre-cooling air line through which air flows before flowing into the heat exchanger, and
an air intake being open to the outside of the airframe to draw air into the pre-cooling air line from the outside of the airframe, and
the air intake is at a position to cause a pressure at an opening of the air intake to be higher than a pressure at an opening of the air outlet during flight of the hydrogen aircraft.

6. The hydrogen aircraft according to claim 5, wherein
the airframe includes a fuselage, and a main wing extending outward from the fuselage in a width direction of the fuselage,
the cooling air line extends along an inner surface of a skin of the main wing, and
the air outlet is located in a rear portion of the skin of the main wing.

7. The hydrogen aircraft according to claim 5, wherein
the airframe includes a fuselage, and a main wing extending outward from the fuselage in a width direction of the fuselage,
the cooling air line extends along an inner surface of a skin of the main wing, and
the air outlet is located on an upper surface of the skin of the main wing.

8. The hydrogen aircraft according to claim 1, wherein
the cooling device includes a cooling air line extending along and in contact with the inner surface of the skin of the airframe to allow passage of air to cool the inner surface of the skin of the airframe.

9. The hydrogen aircraft according to any one of claims 1 to 8, wherein
the cooling device includes a cooling air line through which air to cool the inner surface of the skin of the airframe flows, and
the airframe includes a hollow stiffener stiffening the skin of the airframe and defining at least part of the cooling air line.

10. The hydrogen aircraft according to claim 1, wherein
the cooling device includes a cooling air line through which air to cool the inner surface of the skin of the airframe flows, and
the cooling air line has a smaller flow passage area at a more downstream position of the cooling air line.
